(19) Europäisches Patentamt

European Patent Office

Office européen des brevets

(11) Veröffentlichungsnummer: **0 193 010 B1**

(12) **EUROPÄISCHE PATENTSCHRIFT**

(45) Veröffentlichungstag der Patentschrift: **25.11.92**

(21) Anmeldenummer: **86101587.3**

(22) Anmeldetag: **07.02.86**

(51) Int. Cl.⁵: **A01M 7/00**

(54) **An einem Fahrzeug aufgehängte Verteil- oder Sprüheinrichtung.**

(30) Priorität: **26.02.85 DE 8505371 U**

(43) Veröffentlichungstag der Anmeldung:
**03.09.86 Patentblatt 86/36**

(45) Bekanntmachung des Hinweises auf die
Patenterteilung:
**25.11.92 Patentblatt 92/48**

(84) Benannte Vertragsstaaten:
**AT BE CH DE FR LI LU NL**

(56) Entgegenhaltungen:
**DE-U- 8 414 363**
**FR-A- 2 507 927**
**FR-A- 2 520 264**
**GB-A- 2 100 962**
**US-A- 4 372 492**

(73) Patentinhaber: **SCHMOTZER AGRARTECHNIC GmbH**
**Rothenburger Strasse 45**
**W-8532 Bad Windsheim(DE)**

(72) Erfinder: **Nagel, Kurt**
**Paul-Gerhardt-Weg 4**
**W-8532 Bad Windsheim(DE)**

(74) Vertreter: **Richter, Bernhard, Dipl.-Ing.**
**Beethovenstrasse 10**
**W-8500 Nürnberg 20(DE)**

## Beschreibung

Die Erfindung betrifft eine an einem Fahrzeug aufgehängte Verteil- oder Sprüheinrichtung gemäß dem Oberbegriff des Anspruches 1. Solche Sprüheinrichtungen werden auch Verteil- oder Sprühbalken bzw. auch Breitspritzrahmen genannt. Sie werden am Traktor angehängt über die Felder gefahren und sind mit einer Flüssigkeitsleitung ausgerüstet, die in einen Verband von im Abstand voneinander vorgesehenen Spritzdüsen endet. Die Flüssigkeit wird von einem mitgeführten Behälter über die Leitung den Düsen zugeführt. Zur Erzielung des notwendigen Spritzdruckes ist in der Regel eine Pumpe vorgesehen. Eine Sprüheinrichtung gemäß dem Oberbegriff des Anspruches 1 ist aus der FR-A-2 507 927 bekannt. Die pendelnde Aufhängung ermöglicht es, beim Fahr- und Spritzbetrieb auf dem Acker stets eine parallele Lage der Verteil- oder Sprüheinrichtung zum Erdboden zu erreichen, sofern es sich um einen horizontal verlaufenden Erdboden handelt. Nicht aber ist dies beim Fahren am Hang möglich. Falls dies bei bestimmten Bedingungen nicht gewünscht wird, wird die pendelnde Aufhängung blockiert.

Solche Verteil- oder Sprüheinrichtungen haben eine relativ große, sich quer zur Fahrtrichtung erstreckende Spannweite, damit man pro Fahrt eine möglichst große Fläche bearbeiten kann. Sie bestehen aus mehreren Gliedern, die für den normalen Straßentransport zusammengeklappt und an die Seite des Gerätes gelegt werden müssen. Die vorstehend genannte FR-A-2 507 927 zeigt hierzu lediglich, daß die linke und auch die rechte Hälfte des Spritzrahmens je um eine an einem mittleren Rahmenteil befindliche Gelenkstelle in die Nichtbetriebslage angeklappt werden können. Eine Unterteilung jeder Rahmenhälfte in mehrere für sich klappbare Abschnitte und ein Sprühbetrieb bei teilweiser Einklappung von Gliedern des Spritzrahmens ist jedoch dieser Literaturstelle nicht zu entnehmen. Eine ähnliche Anordnung ist der FR-A-2 520 264 zu entnehmen. Auch sie beschreibt nur ein Einschwenken jeder Seite des Spritzrahmens für sich im ganzen. Der Spritzrahmen kann entweder um eine in Fahrtrichtung liegende Achse des Fahrzeuges pendelnd aufgehängt sein, oder diese pendelnde Aufhängung ist zum Fahrzeug arretiert (Blockierung). Diese Blockierung ist aber nur dann möglich, wenn der Spritzrahmen genau senkrecht zu Säulen verläuft, die vom Fahrzeug her senkrecht nach oben ragen. Damit kann man nicht ein bewußtes Verschwenken der horizontalen Achse des Spritzrahmens zur vertikalen Achse des Fahrzeuges vornehmen und außerdem diese Schwenklage fixieren. Hinzu kommt, daß der konstruktive Aufbau der Anordnung nach FR-A-2 520 264 recht kompliziert und damit aufwendig, störanfällig und gewichtig ist. GB-A-2 100 962 zeigt zwar die Einklappbarkeit der Hälften des Spritzrahmens, wobei jede Hälfte in mehrere einzelne, gegeneinander klappbare Glieder unterteilt ist. Alle übrigen Merkmale des Anspruches 1 sind dieser Literaturstelle jedoch nicht zu entnehmen. Aus der US-A-4372492 ist zwar ein Spritzgestänge (Sprüheinrichtung) bekannt, das um einen am Fahrgestellrahmen befindliche horizontale und in Fahrtrichtung verlaufende Achse schwenkbar ist. Dieses Schwenken erfolgt jedoch nicht pendelnd. Vielmehr ist die jeweilige Schwenklage durch eine Hydraulik eingestellt und fixiert.

Damit erfüllt der Gegenstand dieser Literaturstelle nicht den Oberbegriff des vorliegenden Anspruches 1. Jede Seite des Spritzgestänges ist zwar komplett zusammenzulegen, aber nur für den normalen Straßentransport, wobei in der zusammengelegten Lage diese Teilabschnitte des Spritzgestänges in Fahrtrichtung verlaufen.

Der Erfindung liegt demgegenüber die Aufgabe zugrunde, ausgehend von einer Anordnung gemäß dem Oberbegriff des Anspruches 1 wahlweise mit dieser Anordnung über deren gesamte, maximale Breite sprühen zu können oder aber nur über eine in ihrer Länge demgegenüber reduzierten Breite und zwar ohne Beeinträchtigung des Fahrbetriebes und der beim Sprühen erforderlichen Parallellage des Spritzrahmens zum Erdboden.

Zur Lösung dieser Aufgabe ist, ausgehend vom Oberbegriff des Anspruches 1, die Merkmalskombination gemäß dem Kennzeichen des Anspruches 1 vorgesehen. Während bei dem eingangs erläuterten Stand der Technik nur die linke und die rechte Seite der Verteil- oder Sprüheinrichtung insgesamt eingeklappt werden konnten, wobei im zusammengeklappten Zustand ein Sprühbetrieb nicht möglich war, ist hier gemäß Merkmal a ein Teilbereich, insbesondere jede Seite einzeln für sich einklappbar, so daß man z.B. nur mit der halben Arbeitsbreite der Verteil- oder Sprüheinrichtung über den Acker fahren kann. Man hat aber auch die Möglichkeit nur einen Teilbereich einer Seite einzuklappen und mit dem verbleibenden, nicht eingeklappten Teilbereich dieser Seite zu sprühen, einschließlich der anderen Seite, bzw. eines Teilbereiches der anderen Seite des Spritzrahmens. Somit kann man den in der Praxis oft vorkommenden Fällen, wenn z.B. auf einem Acker Hochspannungsmasten oder sonstige Hindernisse stehen, oder wenn am Rand des Ackers sich Bäume, Hecken und dergleichen Hindernisse befinden, bewußt nur mit einem Teil, z.B. 3/5 bzw. 4/5 der Spannweite der Verteil- oder Sprüheinrichtung zu arbeiten. Dabei wird aber nur mit den jeweils nicht eingeklappten Gliedern des Spritzrahmens gesprüht, während die eingeklappten Glieder keine Sprühflüssigkeit mehr abgeben. Hierdurch ist gesichert, daß auf der jeweils zu besprühenden Fläche trotz der Einklappung eines oder mehrerer Glieder stets die gleiche Menge an Sprühflüssigkeit aufgetragen wird wie bei Nichteinklappung eines Gliedes des Spritzrahmens. Sobald ein Einklappen von Gliedern derart erfolgt, daß auf einer Seite eines oder mehrere Glieder mehr eingeklappt sind als auf der anderen Seite des Fahrzeuges, tritt hierdurch ein Ungleichgewicht der einen Seite gegenüber der anderen Seite des Spritzrahmens ein, welcher bei einer pendelnden Aufhängung gemäß dem Oberbegriff des Anspruches 1 zum Absenken der schwereren Seite des Spritzrahmens, d.h. der Verteil- oder Sprüheinrichtung führen würde. In diesem Fall wird die pendelnde Aufhängung mittels der Sperrvorrichtung hydraulisch blockiert (Merkmal b). Damit ist auch in solchen Fällen der gewünschte eindwandfreie Fahr- und Sprüh- bzw. Verteilbetrieb mit nur einem Teil der kompletten Arbeitsbreite mit einem parallel zum Erdboden verlaufenden Spritzrahmen möglich und zwar in jeder infrage kommenden Spritzhöhenlage des Spritzrahmens zum Erdboden. Diese Höhe der Spritzlage richtet sich nach der zu spritzenden Kultur. Sie kann z.B. zwischen 50 und 180 cm schwanken. Diese Höhenlage muß im übrigen unabhängig davon eingestellt werden können, ob die pendelnde Aufhängung blockiert wird oder nicht. Die Mittel, um im Betrieb eine parallele Lage des Spritzrahmens zum Erdboden zu gewährleisten, können beliebige starre Verbindungen oder Koppelungen des Spritzrahmens mit einem entsprechenden Gegenteil sein (siehe z.B. DE-U-84 14 363: Starre Koppelung des Spritzrahmens 12 mit der Kniehebelhälfte 5). Hiervon wird aber die Pendelung, sofern freigegeben, nicht behindert. Wird dagegen mit der normalen Arbeitsbreite, d.h. ohne eine unsymmetrische Einklappung von Teilen der Verteil- oder Sprüheinrichtung auf dem Acker gefahren, so wird die Sperrvorrichtung unwirksam gemacht und es tritt die gewünschte Pendelung ein.

Gemäß Merkmal c der Erfindung kann zunächst, sofern erforderlich, bei einer hydraulischen Arretierung oder Blockierung (Merkmal b) der pendelnden Aufhängung (Oberbegriff) ein ebenfalls hydraulischer Ausgleich von Lagertoleranzen erfolgen. Solche Lagertoleranzen können aufgrund der o.g. einseitigen Belastung beim zur Mitte des Fahrzeuges unsymmetrischen Einklappen von Teilen (Gliedern) der Verteil- oder Sprüheinrichtung ein ungewolltes Absenken der im Sprühbetrieb längeren Hälfte des Spritzrahmens um einen zwar nicht großen, aber doch spürbaren Winkelbetrag zur Folge haben. Ferner kann das Merkmal c des Anspruches 1 auch dazu dienen, eine Schräglage des Fahrzeuges (Traktors) zur Erdoberfläche auszugleichen. Solche Schräglagen können sich vor allem dann ergeben, wenn das Fahrzeug mit den Rädern einer Seite in einer Furche oder außerhalb des Ackers auf einem tiefer (oder höher) gelegenen Feldrand fährt und dergleichen mehr.

Schließlich stellen diese Mittel zum bewußten Verschwenken der horizontalen Achse des Spritzrahmens bevorzugt zugleich die Mittel dar, welche die Parallellage des Spritzrahmens zum Erdboden gewährleisten, indem sie in der jeweiligen Stellage die vorstehend erläuterte starre Kopplung bewirken.

Die Merkmale a, b und c des Anspruches 1 werden sämtlich hydraulisch betätigt, bzw. sind als Hydraulik ausgebildet. Dies erlaubt die Durchführung aller Manipulationen für das Sprühen und das Befahren von Feldern, die während des Arbeitsvorganges die Anpassung der Sprühbreite erfolgen, durchweg vom Fahrersitz aus. Ein Anhalten des Zugfahrzeuges und Absteigen des Fahrers ist nicht nötig.

Eine bevorzugte Ausführungform der Erfindung ist Inhalt des Anspruches 2. Diese pendelnde Aufhängung ist Inhalt des o.g. DE-U-84 14 363. Die dort vorgesehene Kniehebelanordnung kann in einfacher Weise blockiert werden. Hierzu wird beispielsweise auf die weiter bevorzugte Ausführungsform gemäß Anspruch 3 verwiesen.

Die Merkmale des Anspruches 4 beinhalten eine ebenfalls bevorzugte Ausführungsform der Erfindung für die Verstellung der Schwenklage der Verteil- oder Sprüheinrichtung zum Fahrzeug, um damit Schräglagen des Fahrzeuges zum Erdboden und/oder die erwähnten Lagertoleranzen ausgleichen zu können.

Die Merkmale des Anspruches 5 beinhalten eine bevorzugte Ausführung der Ein- und Ausklappung der Glieder des Spritzrahmens.

Weitere Vorteile und Merkmale der Erfindung sind der nachfolgenden Beschreibung und der zugehörigen Zeichnung von Ausführungsmöglichkeiten der Erfindung zu entnehmen. Es zeigt:

Fig. 1: eine Verteil- oder Sprüheinrichtung (nachfolgend der Kürze halber "Spritzrahmen" genannt) von hinten in Fahrtrichtung,

Fig. 2: den Spritzrahmen gemäß Fig. 1 in der Draufsicht,

Fig. 3: den Spritzrahmen gemäß Fig. 1, wobei zwei Spritzrahmen glieder wieder eingeklappt sind,

Fig. 4: den Spritzrahmen in der Position der Fig. 3 in der Draufsicht,

Fig. 5: den Spritzrahmen nach Fig. 1, wobei alle Glieder eingeklappt sind (z.B. für den Straßentransport),

Fig. 6: den Spritzrahmen in der Lage gemäß Fig. 5 in der Draufsicht,

Fig. 7, 8: das Pendelsystem in der Frontansicht,

Fig. 9: eine Seitenansicht des Systems der Fig. 7, 8.

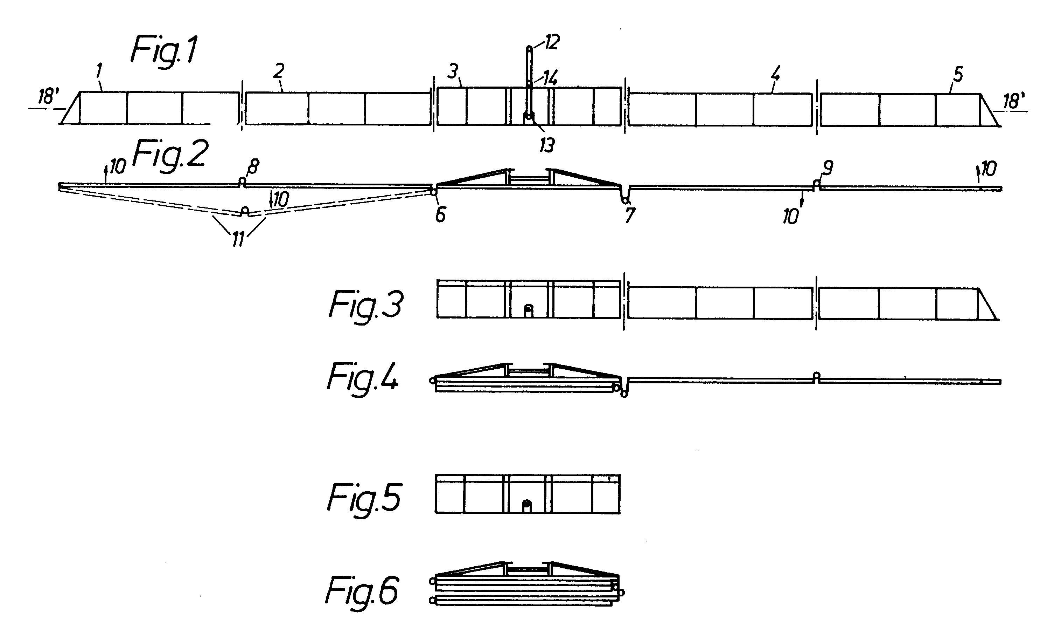

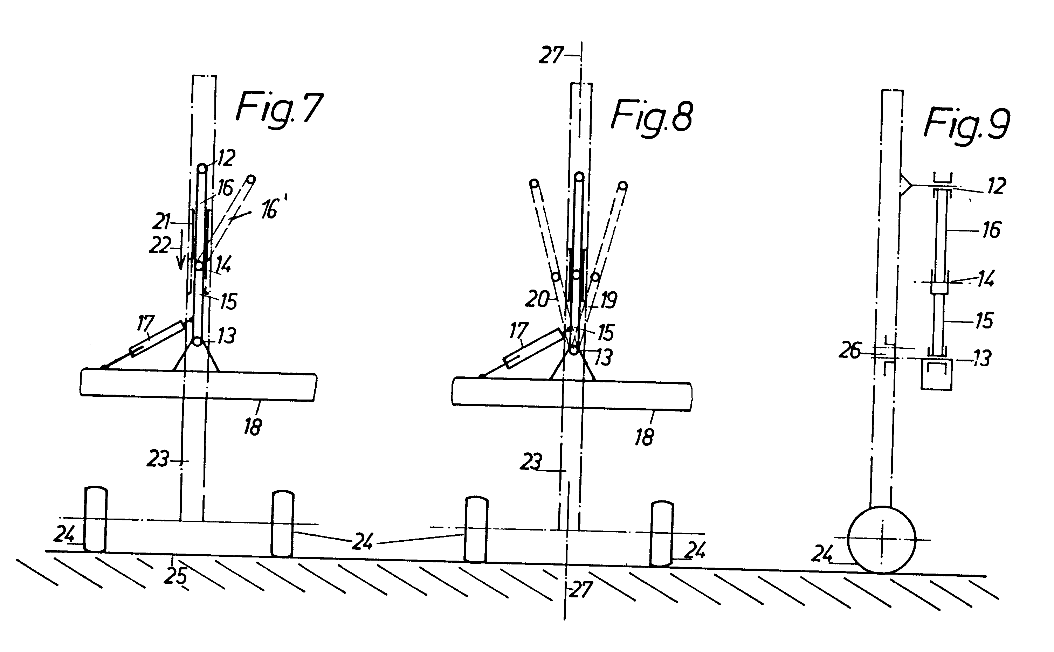

In den Figuren 1 bis 6 sind das Fahrzeug, das Pendelsystem und die zugehörigen Arretier- bzw. Verstelleinrichtungen im wesentlichen nicht dargestellt. Nur Fig. 1 zeigt die nachstehend anhand der Fig. 7, 8 noch näher zu erläuternde Kniehebelanordnung 15, 16, die bei 13 am Spritzrahmen 18 der Verteil- oder Sprüheinrichtung und bei 12 am Fahrzeug angelenkt ist. 14 ist der Gelenkpunkt zwischen den beiden Kniehebeln 15, 16. Die eine in der Zeichnung rechte Pendellage ist mit 16' angedeutet. Eine entsprechende Pendelung zur anderen, linken Seite ist ebenfalls möglich (nicht dargestellt). Hiermit werden kurze schlagartige Stöße, die beim Fahrbetrieb vom Schlepper auf den Spritzrahmen ausgeübt werden können, absorbiert und nicht auf diesen übertragen. Fährt dagegen der Schlepper dauernd in einer Schräglage (Hanglage) dann folgt der Spritzrahmen dieser Bewegung (siehe unten). Hierzu ist eine starre Koppelung des Spritzrahmens mit einem entsprechenden Gegenteil vorgesehen. Dies kann eine (nicht dargestellte) starre Koppelung des Spritzrahmens 18 mit dem unteren Kniehebel 15 sein. In der vorliegenden, bevorzugten Ausführungsform der Erfindung erfolgt diese starre Koppelung aber durch das nachstehend noch näher zu erläuternde hydraulische Glied 17.

Der Spritzrahmen besteht hier aus fünf Teilbreiten oder Gliedern 1 bis 5, wobei das Glied 3 das Mittelstück und Grundbasis bildet. Die vorgenannten Glieder sind über die Scharniere 8, 6, 7 und 9 miteinander verbunden und in die Pfeilrichtungen 10 abklappbar, wobei in Fig. 2 links gestrichelt mit Ziffer 11 der Beginn einer solchen Klappung zwischen den Gliedern 1 und 2 dargestellt ist. Es ist ersichtlich, daß die Glieder einer Hälfte, d.h. 1 und 2 einerseits oder aber die Glieder der anderen Hälfte, d.h. 4 und 5 andererseits je für sich bis in den Bereich des mittleren Gliedes 3 klappbar sind (siehe Fig. 3 und 4). Damit kann mit den verbleibenden nicht eingeklappten Gliedern (in den Fig. 3 und 4 die Glieder 3; 4 und 5) das Mittel ausgesprüht bzw. verteilt werden. Man kann aber auch so vorgehen, daß bei der hier bevorzugten und dargestellten Ausführungsform, nämlich Aufteilung in ein mittleres und zwei mal zwei seitliche Glieder nur das äußerste der seitlichen Glieder einklappbar ist (nicht dargestellt). So kann man z. B. nur Glied 1 gegen Glied 2 klappen oder aber nur Glied 5 gegen Glied 4 oder aber auch zugleich Glied 1 gegen Glied 2 und Glied 5 gegen Glied 4. Schließlich sind noch die Kombinationen möglich, daß Glied 1 und 2 eingeklappt sind und nur Glied 5, oder auch Glied 5 und 4 und Glied 1 sind eingeklappt. Ein Sprühen oder Verteilen erfolgt jeweils nur durch die nicht eingeklappten Glieder, denn sobald eines der seitlichen Glieder 1, 2, 4 oder 5 eingeklappt sind, wird mit diesem Einklappvorgang durch nicht näher dargestellte Mittel oder Vorrichtungen die Zufuhr des zu versprühenden oder zu verteilenden Mediums unterbrochen. Damit kann sich die Bedienungsperson je nach der Lage der von ihr auf dem Acker abgefahrenen Bearbeitungsbahnen beim Auftreten von Hindernissen, wie Hochspannungsmasten, Bäumen, Sträucher usw. den jeweiligen Erfordernissen an die Breite des Spritzrahmens und auch an die Lage eines solch breiten Spritzrahmens in Relation zum Fahrzeug anpassen. Das Ein- und Ausklappen der Glieder kann hydraulisch erfolgen, wodurch dem Fahrer das lästige und zeitraubende zweimalige Ab- und wieder Aufsteigen erspart wird, das beim Stand der Technik für die Einklappung der Rahmenteile von Hand nötig war. Es ist also dem Fahrer von seinem Fahrersitz her eine hydraulische Betätigung der Aus- und Einklappung der Glieder des Spritzrahmens und/oder des längenverstellbaren Gliedes 17 und/oder der Betätigung der Arretierung 21 möglich. Hierdurch kann man z. B. mit einem Knopfdruck bei Beginn des Einklappens der seitlichen Glieder des Spritzrahmens auch die Sperre betätigen, so daß von vornherein kein schädliches Ungleichgewicht entsteht.

Die eingangs bereits anhand der Fig. 1 kurz angedeutete pendelartige Aufhängung ist im größeren Maßstab näher den Fig. 7 bis 9 zu entnehmen. Dabei ist nur strichpunktiert das Fahrzeug 23 mit Rädern 24 angedeutet, die auf dem Erdboden 25 fahren. Fig. 9 zeigt, wie der Scharnierpunkt 13 zwischen dem Rahmen 18 und dem unteren Kniehebel 15 in einer vertikalen Kulisse 26 des Schleppers 23 verschiebbar gelagert ist. Diese pendelnde Aufhängung hat den Vorteil, daß beim Fahren des Schleppers über Bodenunebenheiten auftretende Stöße oder Schwankungen nicht auf den Spritzrahmen übertragen werden. Dies hätte nämlich aufgrund der großen Auslegebreite des Spritzrahmens unerwünschte Schwankungen zur Folge. Das Gewicht des Spritzrahmens bewirkt aufgrund der Führung der Anlenkung 13 in der vertikalen Kulisse 26 stets eine Streckung der aus den Teilen 15, 16 bestehenden Kniehebelanordnung. Die horizontale Achse 18' des Spritzrahmens 18 muß sich dabei immer zur vertikalen Achse 27 des Schleppers im rechten Winkel einpendeln und zwar sowohl auf ebenem wie auch auf hängigem Gelände. Mit anderen Worten: Dieses Pendelsystem ist so konzipiert, daß das Spritzrahmenniveau automatisch dem Schlepperniveau folgt, indem der Spritzrahmen nicht durch die Schwerkraft in der Lage bleibt, sondern stets über den Schlepper dem Gelände angepaßt wird. Damit haben die beiderseitigen Auslegerarme des Spritzrahmens immer den gleichen Abstand vom Erdboden.

Das vorgenannte Pendelsystem kann aber bei Ungleichgewicht, d.h. wenn einer der Fälle der oben erläuterten Möglichkeiten der Einklappung der Glieder eintritt, bei denen eine Seite Übergewicht hat, arretiert werden. Damit hat der einseitig vorragende, übergewichtige Teil des Auslegers des Spritzrahmens nach wie vor die zum Spritzen oder Verteilen richtige Lage. Eine solche Arretierung kann durch einen Schieber, eine Hülse oder dergleichen 21 erfolgen, welche aus der Position gemäß Fig. 7 in die Lage nach Fig. 8 verschoben wird (22). In Fig. 7 befindet sie sich lediglich im Bereich des oberen Kniehebels 16, so daß die Pendeleinrichtung funktionsfähig ist. In der Lage nach Fig. 8 befindet sie sich sowohl im Bereich des oberen als auch des unteren Kniehebels 16 bzw. 15 und blockiert beide Kniehebel gegen ein Ausknicken um den Gelenkpunkt 14. Diese Verriegelung der pendelnden Aufhängung ist in jeder vorkommenden Spritzhöhenlage des Spritzrahmens möglich.

Mit Hilfe eines in seiner Länge verstellbaren, z. B. hydraulischen Gliedes 17 kann die Winkellage zwischen dem Spritzrahmen 18 und der Pendeleinrichtung (hier dem unteren Hebel 15) nach beiden Richtungen hin verändert werden, d.h. sowohl in die in Fig. 8 der Einfachheit halber nur für die Kniehebelanordnung dargestellte und mit 19 bzw. mit 20 angedeutete Position. Dies dient dem erläuterten Ausgleich von Lagertoleranzen und/oder Schräglagen des Schleppers zum Erdboden. In dieser Lage kann, wenn erforderlich, auch die Arretierung der Pendeleinrichtung erfolgen, wie sie beispielsweise mit dem Teil 21 geschehen kann. Dies hat eine entsprechende Veränderung der Winkellagen des Spritzrahmens zur vertikalen Schlepperachse zur Folge.

**Patentansprüche**

1. Anordnung mit einer an einem Fahrzeug um eine in Fahrtrichtung liegende Achse (13) pendelnd aufgehängten, quer zur Fahrtrichtung sich erstreckenden Verteil- oder Sprüheinrichtung (18) für die Verteilung, z.B. das Versprühen von Pflanzenschutz- bzw. Düngemitteln oder dergleichen, wobei jede Seite des Spritzrahmens für sich ganz ein- und ausklappbar ist, und mit Mitteln, um im Betrieb eine parallele Lage der Verteil- oder Sprüheinrichtung (18) (hier kurz "Spritzrahmen" genannt) zum Erdboden zu gewährleisten, wobei eine Sperrvorrichtung (21) zum Arretieren (Blockieren) der pendelnden Aufhängung des Spritzrahmens (18) in jeder Spritzhöhenlage vorgesehen ist, dadurch gekennzeichnet, daß

a) jede Seite (links oder rechts) des Spritzrahmens (18) für sich auch teilweise hydraulisch ein- oder wieder ausklappbar ist, wobei beim ganz oder teilweisen Einklappen der Glieder (1, 2, 4, 5) selbstätig wirkende Mittel zum Unterbrechen der Zufuhr des zu sprühenden oder verteilenden Mediums zum jeweils eingeklappten Glied bzw. den jeweils eingeklappten Gliedern (1, 2, 4, 5) vorgesehen sind,

b) daß eine hydraulisch betätigte Sperrvorrichtung (21) zum Arretieren (Blockieren) der pendelnden Aufhängung des Spritzrahmens (18) in jeder Spritzhöhenlage vorgesehen ist,

c) daß hydraulische Mittel (17) zum bewußten Verschwenken der horizontalen Achse (18') des Spritzrahmens (18) zur vertikalen Achse (27) des Fahrzeuges (23) um einen bestimmten, bevorzugt einstellbaren Winkelbetrag und zur Fixierung dieses Winkelbetrages vorgesehen sind, wobei diese Mittel (17) bevorzugt in der jeweiligen Schwenklage zugleich der Sicherung der Parallellage des Spritzrahmens (18) zum Erdboden dienen.

2. Anordnung nach Anspruch 1, dadurch gekennzeichnet, daß zur pendelnden Aufhängung der Spritzrahmen (18) am freien unteren Ende (13) einer Kniehebelanordnung (15, 16) angebracht und in einer Führung (26) des Fahrzeuges (23) gleitend geführt ist, wobei diese Führung im Winkel, bevorzugt im rechten Winkel zur horizontalen Achse (18') des Spritzrahmens (18) verläuft, daß das obere freie Ende (12) der Kniehebelanordnung (15, 16) am Fahrzeug (23) angelenkt ist, wobei diese Anlenkstelle zum Fahrzeug (23) fix ist und daß als Sperrvorrichtung (21) eine Blockierung der Kniehebelanordnung (15, 16) dient.

3. Anordnung nach Anspruch 2, gekennzeichnet durch eine Anlageschiene, Hülse, oder dergleichen (21), welche über beide Kniehebel (15, 16), deren Ausknicken um deren gemeinsamen Anlenkpunkt (14) verhindernd schiebbar ist.

4. Anordnung nach Anspruch 2 oder 3, dadurch gekennzeichnet, daß ein in seiner Länge verstellbares und fixierbares Glied (17) sich zwischen dem Spritzrahmen (18) und der Kniehebelanordnung (15, 16), bevorzugt deren unteren Kniehebel (15) abstützt.

5. Anordnung nach einem der Ansprüche 1 bis 4, dadurch gekennzeichnet, daß der Spritzrahmen (18) aus mehreren, bevorzugt fünf zueinander scharnierartig abklappbaren Gliedern (1, 2, 3, 4 und 5) besteht, wobei eines dieser Glieder (3) ein Mittelglied oder Basis bildet und daß an jeder Seite des Mittelgliedes (3) ein oder mehrere, bevorzugt zwei Seitenglieder (1, 2 bzw. 4, 5) vorgesehen sind, wobei jedes Seitenglied für sich unabhängig zum benachbarten Seitenglied bzw. zum benachbarten Mittelglied abklappbar ist.

**Claims**

1. Arrangement comprising a distributing or spraying device (18), which is suspended at a vehicle to be pendulating about an axis (13) lying in travel direction and which extends transversely to the travel direction, for the distribution, for example spraying, of plant protection or fertilising agents or the like, wherein each side of the spray boom is able to be completely folded in or out by itself, and further comprising means to ensure in operation a parallel setting of the distributing or spraying device (18) (here called "spray boom" for short) relative to the ground, wherein a blocking device (21) is provided for arresting (locking) the pendulating suspension of the spray boom (18) in every spray height setting, characterised thereby that
   a) each side (left or right) of the spray boom (18) is also able to be partly hydraulically folded in or back out by itself, wherein in the case of complete or partial folding-in of the elements (1, 2, 4, 5) automatically acting means are provided for interruption of the feed to the respective folded-in element or the respective folded-in elements (1, 2, 4, 5) of the medium to be sprayed or distributed,
   b) that a hydraulically actuated blocking device (21) for the arresting (locking) of the pendulating suspension of the spray boom (18) in every spray height setting is provided, and
   c) that hydraulic means (17) are provided for the desired pivoting of the horizontal axis (18') of the spray boom (18) relative to the vertical axis (27) of the vehicle (23) through a determined, preferably settable, angular amount and for the fixing of this angular amount, wherein these means (17) preferably serve in the respective pivot setting at the same time for the securing of the parallel setting of the spray boom (18) relative to the ground.

2. Arrangement according to claim 1, characterised thereby that for the pendulating suspension, the spray boom (18) is mounted at the free lower end (13) of a toggle lever arrangement (15, 16) and is slidingly guided in a guide (26) of the vehicle (23), wherein this guide extends at an angle, preferably at a right angle, to the horizontal axis (18') of the spray boom (18), that the upper free end (12) of the toggle lever arrangement (15, 16) is pivoted to the vehicle (23), wherein this pivot location is fixed relative to the vehicle (23), and that a locking of the toggle lever arrangement (15, 16) serves as blocking device (21).

3. Arrangement according to claim 2, characterised by a bearing rail, sleeve or the like (21) which is slidable over both toggle levers (15, 16) in order to prevent buckling thereof about their common pivot point (14).

4. Arrangement according to claim 2 or 3, characterised thereby that an element (17) adjustable and fixable in its length is supported between the spray boom (18) and the toggle lever arrangement (15, 16), preferably the lower toggle lever (15) thereof.

5. Arrangement according to one of claims 1 to 4, characterised thereby, that the spray boom (18) consists of several, preferably five, elements (1, 2, 3, 4 and 5) foldable relative to one another in the manner of a hinge, wherein one of these elements (3) forms a central element or base, and that provided at each side of the central element (3) are one or more, preferably two, lateral elements (1, 2 or 4, 5), wherein each lateral element by itself is foldable independently relative to the adjacent lateral element or to the adjacent central element.

**Revendications**

1. Système comprenant un dispositif de distribution ou de pulvérisation (18) suspendu à un véhicule de façon à pouvoir osciller à la manière d'un pendule autour d'un axe (13) orienté dans le sens de marche, dispositif qui s'étend transversalement au sens de marche et sert à la distribution, par exemple à la pulvérisation, de produits phytosanitaires, engrais ou analogues, chaque côté du dispositif de distribution ou de pulvérisation (18) (appelé ici simplement "cadre pulvérisateur") étant entièrement et individuellement repliable et dépliable, ainsi que des moyens pour assurer pendant le fonctionnement une position du cadre pulvérisateur parallèle au sol, avec prévision d'un mécanisme de verrouillage (21) pour immobiliser (bloquer) la suspension pendulaire du cadre pulvérisateur (18) à toute position de pulvérisation dans le sens de la hauteur, <u>caractérisé en ce que</u>
   a) chaque côté (gauche ou droit) du cadre pulvérisateur (18) est également repliable ou dépliable partiellement, par voie hydraulique, des moyens à fonctionnement automatique étant prévus pour, lors du repliage complet ou partiel des segments (1, 2, 4, 5), interrompre l'amenée du fluide à pulvériser ou a distribuer vers le segment replié ou vers les segments repliés (1, 2, 4, 5),

b) qu'un mécanisme de verrouillage (21) à commande hydraulique est prévu pour immobiliser (bloquer) la suspension pendulaire du cadre pulvérisateur (18) à toute position de pulvérisation dans le sens de la hauteur et

c) que des moyens hydrauliques (17) sont prévus pour incliner ou basculer volontairement l'axe horizontal (18') du cadre pulvérisateur (18) par rapport à l'axe vertical (27) du véhicule (23) d'une quantité angulaire déterminée, de préférence réglable, et pour fixer cette quantité angulaire, ces moyens (17) servant de préférence en même temps, à la position d'inclinaison ou de basculement choisie, au maintien de la position parallèle au sol du cadre pulvérisateur (18).

2. Système selon la revendication 1, caractérisé en ce que, pour la suspension pendulaire, le cadre pulvérisateur (18) est monté à l'extrémité inférieure libre (13) d'un dispositif à genouillère (15, 16) et est guidé coulissant dans un guide (26) du véhicule (23), ce guide renfermant un angle, de préférence un angle droit avec l'axe horizontal (18') du cadre pulvérisateur (18), que l'extrémité supérieure libre (12) du dispositif à genouillère (15, 16) est articulée au véhicule (23), ce point d'articulation au véhicule (23) étant fixe, et que le mécanisme de verrouillage (21) sert à bloquer le dispositif à genouillère (15, 16).

3. Système selon la revendication 2, caractérisé par un rail de butée, un manchon ou un élément semblable (21) que l'on peut faire glisser le long ou autour des deux biellettes (15, 16) de la genouillère en empêchant ainsi leur fléchissement autour de leur point d'articulation (14) commun.

4. Système selon la revendication 2 ou 3, caractérisé en ce qu'un organe (17) de longueur réglable et blocable s'appuie entre le cadre pulvérisateur (18) et le dispositif à genouillère (15, 16), de préférence la biellette inférieure (15) de ce dispositif.

5. Système selon une des revendications 1 à 4, caractérisé en ce que le cadre pulvérisateur (18) est composé de plusieurs, de préférence cinq segments (1, 2, 3, 4 et 5) qui sont repliables l'un par rapport à l'autre autour de charnières, l'un (3) de ces segments formant un segment central ou élément de base, et qu'un ou plusieurs, de préférence deux segments latéraux (1, 2 ou 4, 5) sont prévus sur chaque côté du segment central (3), chaque segment latéral étant repliable individuellement, indépendamment du segment latéral ou central voisin.

Fig.1

Fig.2

Fig.3

Fig.4

Fig.5

Fig.6

EP 0 193 010 B1

Fig.7    Fig.8    Fig.9

EP 0 193 010 B1